# EUROPÄISCHE PATENTSCHRIFT

(11) **EP 1 391 586 B1**
(45) Veröffentlichungstag und Bekanntmachung des Hinweises auf die Patenterteilung: **12.11.2008**
(21) Anmeldenummer: 02018636.7
(22) Anmeldetag: 20.08.2002
(51) Int. Cl.: F01D 25/12, F01D 25/16, F16C 39/06, F02C 6/12

(54) **Abgasturbolader**
Turbocharger
Turbocompresseur

(43) Veröffentlichungstag der Anmeldung: 25.02.2004
(73) Patentinhaber: BorgWarner, Inc., Auburn Hills, MI 48326-2872 (US)
(72) Erfinder: Jaisle, Jens-Wolf, Dr., 56190 Billiers (FR)
(74) Vertreter: Wolf, Eckhard

(56) Entgegenhaltungen:
- DE-A- 10 040 508
- FR-A- 1 059 967
- US-A- 5 521 448
- PATENT ABSTRACTS OF JAPAN 1984, & JP 59 073624 A (AISIN SEIKO CO LTD), 25. April 1984 (1984-04-25)

## Beschreibung

Die Erfindung betrifft einen Abgasturbolader mit einem Gehäuse und einer im Gehäuse um ihre Längsachse drehbar angeordneten Welle, auf der ein Turbinenrad und ein Verdichterrad sitzen und die in als Magnetlager ausgebildeten Radiallagern und wenigstens einem Axiallager geführt ist, wobei die Lager jeweils eine auf der Welle sitzende Lagerscheibe und wenigstens einen diesem an zumindest einer Seite axial unter Bildung eines Spaltes gegenüberliegenden Stator aufweisen. Die Erfindung betrifft weiterhin ein Verfahren zur Kühlung der Lager eines derartigen Abgasturboladers.

Abgasturbolader dienen der Verbesserung des Wirkungsgrades und damit der Leistungssteigerung von Verbrennungsmotoren. Sie weisen eine Welle auf, die einerends mit einem Turbinenrad und anderenends mit einem Verdichterrad versehen ist. Das Turbinenrad wird vom Abgasstrom des Verbrennungsmotors beaufschlagt, wobei im Wesentlichen ein Teil der thermischen Energie des Abgases durch das Turbinenrad in eine Drehbewegung umgesetzt wird. Über die Welle wird das Verdichterrad angetrieben, das Frischluft ansaugt und mit Überdruck in die Einlasskanäle des Verbrennungsmotors einströmen lässt und damit den Füllungsgrad verbessert.

An die Lagerung der Welle von Abgasturboladern werden hohe Anforderungen gestellt. Zum einen erreicht die Welle hohe Drehzahlen bis zu 300.000 U/min. Zum anderen sind der Abgasturbolader und damit dessen Lager hohen Temperaturen ausgesetzt. Ein weiteres Problem besteht darin, dass der auf das Turbinenrad auftreffende Abgasstrom starke Axialkräfte erzeugt, die in einem Axiallager aufgefangen werden müssen. Wegen der hohen Drehzahlen müssen die sich drehenden Teile des Abgasturboladers hochgenau ausgewuchtet werden, damit so wenig wie möglich Schwingungen bzw. Vibrationen erzeugt werden. Bei alledem muss zusätzlich noch darauf geachtet werden, dass der sehr breite Temperaturbereich, in dem ein Abgasturbolader arbeitet, nicht zu Verspannungen der Lager aufgrund von Materialausdehnungen führt.

Als Lager für die Welle kommen bisher ausschließlich Gleit- oder Wälzlager zur Anwendung. Sie unterliegen mit Blick auf die vorgenannten Beanspruchungen erheblichem Verschleiß und sind ebenso wie deren Schmierung zu ca. 80 % für den Ausfall des Abgasturboladers verantwortlich. Demgegenüber verspricht eine magnetische Lagerung der Welle den Vorteil, dass auf den Einsatz von Öl als Schmiermittel verzichtet werden kann. Dadurch lassen sich strenge Abgasnormen für Fahrzeuge einhalten und die Zuverlässigkeit der Tubolader erhöhen. Weiterhin bieten magnetische Lager den Vorteil der Reduzierung oder sogar Vermeidung des Wuchtens der rotierenden Komponenten, da diese Lager den Rotor in seiner Schwerpunktachse halten. In einem Punkt ist der magnetischen Lagerung im Vergleich zu herkömmlichen ölgeschmierten Gleit- oder Wälzlagern zusätzlich Rechnung zu tragen. Während ein nicht unerheblicher Teil der Wärme der Welle bei letzteren durch das durchströmende Schmieröl abgeleitet wird, ist dies bei der Magnetlagerung, siehe z.B. JP-A-59 073 624, nicht der Fall. Eine Aufheizung der im Lagergehäuse befindlichen Luft ist die Folge. Die Luft darf dort jedoch die höchstens zulässige Temperatur der zum Einsatz kommenden Magnete nicht übersteigen. Bei der Verwendung von NdFeB Magneten liegt diese Grenze bei etwa 130 °C.

Der Erfindung liegt daher die Aufgabe zugrunde, einen Abgasturbolader mit permanentmagnetischer Lagerung bereitzustellen, bei dem die höchstens zulässige Temperatur im Bereich der Magnete nicht überschritten wird.

Zur Lösung dieser Aufgabe werden die in Patentanspruch 1 und 10 angegebenen Merkmalskombinationen vorgeschlagen. Vorteilhafte Ausgestaltungen und Weiterbildungen der Erfindung ergeben sich aus den abhängigen Ansprüchen.

Der Grundgedanke der Erfindung besteht darin, die notwendigerweise vorhandenen Lagerspalte der Magnetlager für eine Zwangskühlung zu nutzen. Gemäß der Erfindung wird daher vorgeschlagen, dass in dem Gehäuse mindestens ein Strömungskanal gebildet ist, über den mindestens ein Lagerspalt mit einem Luftstrom beaufschlagbar ist. Der Luftstrom wird bevorzugt als Teilstrom von der verdichteten Luft für den Motor am Verdichtergehäuse abgezweigt. Dies kann dadurch erreicht werden, dass der mindestens eine Strömungskanal in ein Verdichtergehäuse des Turboladers mündet. Der Strömungskanal kann in Abhängigkeit von der geometrischen Gestaltung des Gehäuses bei Bedarf zumindest abschnittsweise durch eine außerhalb des Gehäuses verlaufende Leitung gebildet sein.

Der Abgasturbolader wird in der Regel mindestens zwei Radiallager und ein Axiallager aufweisen. Gemäß einer ersten alternativen Ausgestaltung der Erfindung kann daher ein separater Strömungskanal zu jedem der Lager bzw. deren Lagerspalte führen. Gemäß einer bevorzugten zweiten alternativen Ausgestaltung der Erfindung, die sich auf konstruktiv einfachere Weise realisieren läßt, ist jedoch vorgesehen, dass die Spalte der Lager über weitere in dem Gehäuse gebildete Strömungskanäle miteinander kommunizieren und somit in Folge nacheinander von dem Luftstrom durchströmt werden können. Hierbei führt der Strömungskanal vorzugsweise zum turboradnächsten Lager, das der größten Temperaturbelastung ausgesetzt ist und daher bevorzugt als erstes von dem zunächst noch relativ kühlen Luftstrom durchströmt werden sollte.

Zur Ableitung des durch die Lagerspalte geführten Luftstroms weist das Gehäuse zweckmäßig mindestens eine Austrittsöffnung für den Luftstrom auf. Die Ableitung kann alternativ auch auf besonders einfache Weise dadurch geschaffen werden, dass ein üblicherweise vorhandener Dichtungsring für die Welle im Bereich des Verdichterrads weggelassen wird, wodurch zwischen der Welle und dem Gehäuse ein Ringspalt verbleibt, durch den der Luftstrom austreten kann.

Der Bedarf an Kühlluft für die Lager ist klein im Vergleich zum Luftbedarf des von dem Turbolader beaufschlagten Motors, so dass der Querschnitt des in das unter Druck stehende Verdichtergehäuse mündenden Strömungskanals klein sein kann gegenüber dem Querschnitt einer zum Motor führenden Leitung für die verdichtete Luft. Ein nennenswerter Druckverlust durch die Kühlluftabzweigung ist nicht zu befürchten, so dass durch die Abzweigung auch keine Einbuße an Motorleistung entsteht. Obwohl die Kühlluft grundsätzlich auch durch eine externe Luftquelle geliefert werden könnte, ist die geschilderte Abzweigung daher die einfachste und auch kostengünstigste Lösung.

Das erfindungsgemäße Verfahren zur Kühlung von magnetischen Lagern eines Abgasturboladers, wobei der Abgasturbolader ein Gehäuse und eine im Gehäuse um ihre Längsachse drehbar angeordnete Welle, auf der ein Turbinenrad und ein Verdichterrad sitzen, aufweist und wobei die Lager auf der Welle angeordnete Lagerscheiben und von diesen durch einen Luftspalt getrennte, gehäusefeste Statoren aufweisen, sieht vor,dass die Lagerspalte mit einem Luftstrom beaufschlagt werden. Dieser wird bevorzugt als Teilstrom von der mittels des Verdichterrads verdichteten Luft abgezweigt und kann durch einen Gehäusekanal zu mindestens einem der Lagerspalte geführt werden. Mehrere vorhandene Lager können entweder unabhängig voneinander oder, soweit sie strömungsmäßig miteinander in Verbindung stehen, seriell mit einem Luftstrom beaufschlagt werden. Bevorzugt wird der Luftstrom von der Turbinenradseite zur Verdichterradseite durch die Lagerspalte geführt und nach dem Durchströmen mindestens eines Lagerspalts über eine Austrittsöffnung in den Bereich außerhalb des Gehäuses geleitet, wobei die Austrittsöffnung auf besonders einfache Weise durch Weglassen eines verdichterradseitigen Wellendichtrings geschaffen werden kann.

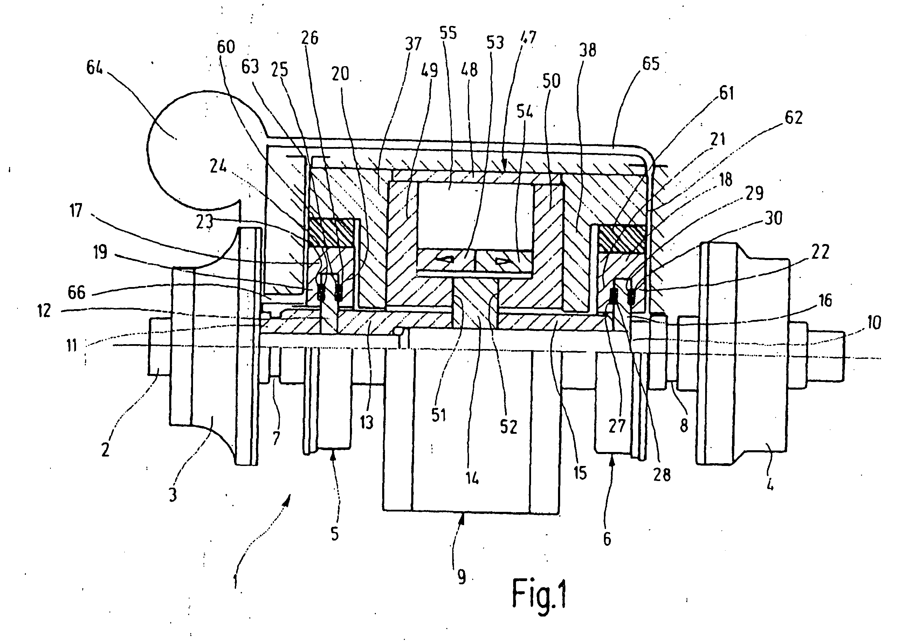

Im folgenden wird die Erfindung anhand eines in der Zeichnung schematisch dargestellten Ausführungsbeispiels näher erläutert. Es zeigt
- Fig. 1: die Seitenansicht eines Abgasturboladers mit Teilen seines Lagergehäuses mit Teilschnittdarstellung des oberen Teils der Lagerung der Welle und mit im Lagergehäuse vorgesehenen Strömungskanälen für eine Kühlluftbeaufschlagung der Lager.

Der in Fig. 1 dargestellte Abgasturbolader 1 weist eine Welle 2 auf, an deren linksseitigem Ende ein Verdichterrad 3 und an deren rechtsseitigem Ende ein Turbinenrad 4 sitzen. Das Verdichterrad 3 ist in an sich bekannter Weise als Radialverdichter ausgebildet.

Zwischen Verdichterrad 3 und Turbinenrad 4 befinden sich zwei Radiallager 5, 6. Die Radiallager 5, 6 sind dem Verdichterrad 3 bzw. Dem Turbinenrad 4 benachbart. Zwischen ihnen befinden sich Nuten 7, 8, die der Aufnahme von Dichtringen dienen, wobei sie Begrenzungslager mit einem typischen Spiel von ca. ± 0,15 mm bilden. Zwischen den Radiallagern 5, 6, befindet sich ein Axiallager 9.

Wie sich aus dem oberen Teil von Fig. 1 ersehen lässt, ist die Welle 2 von insgesamt sechs Ringen umgeben, die gegen einen Bund 10 an der Welle 2 axial verspannt sind. Auf eine erste Wellenhülse 11 mit der Nut 7 folgt eine Lagerscheibe 12, eine zweite Wellenhülse 13, eine Lagerscheibe 14, eine dritte Wellenhülse 15 und eine weitere Lagerscheibe 16.

Die Lagerscheiben 12, 16, gehören zu den Radiallagern 5, 6. Sie werden jeweils beidseitig durch ein im Querschnitt U-förmiges, die Welle 2 koaxial umgebendes Joch 17, 18 einfasst, wobei jedes Joch 17, 18 ein Paar von Radiallagerstatoren 19, 20 bzw. 21, 22 aufweist, die die Schenkel der Joche 17, 18, bilden. Die Radiallagerstatoren 19, 20, 21, 22 und die Lagerscheiben 12, 16 weisen Permanentmagnete 23, 24, 25, 26 bzw. 27, 28, 29, 30 auf, die sich in den beiden Radiallagern 5, 6 jeweils in axialer Richtung gegenüberstehen. Sie sind so polarisiert, dass sie sich jeweils anziehen, so dass sich in den Spalten zwischen den Lagerscheiben 12, 16 und den Radiallagerstatoren 19, 20, 21, 22 ein axial gerichtetes und attrahierendes Magnetfeld ergibt. Die Magnetfelder zentrieren die Welle 2, wobei eine Radialsteifigkeit von beispielsweise 160 kN/m erreicht wird.

Die Joche 17, 18 werden radial außenseitig von federelastischen Elementen 60, 61 umgeben, die als zylindrische Ringe aus Kunststoffmaterial ausgebildet sind. Um auftretende Schwingungen möglichst wirksam dämpfen zu können, sind die Ringe 60, 61 spaltfrei mit der radial außen liegenden Fläche der Joche 17, 18 einerseits und der radial innen liegenden Fläche eines die Joche 17, 18 axial übergreifenden Flansches von Gehäusescheiben 37, 38 andererseits verbunden. Die Gehäusescheiben 37, 38 sind mit dem in der Zeichnung nicht näher dargestellten Gehäuse des Turboladers verbunden. Die Ringe 60, 61 werden durch Radialbewegungen der Joche 17, 18 auf Druck beansprucht und dämpfen auf diese Weise die Radialbewegung. Die Federsteifigkeit der Ringe 60, 61 liegt im Bereich von 200 kN/m bis 600 kN/m. Die Dämpfungskonstante der Ringe 60, 61 beträgt etwa 100 kg/s bis 300 kg/s.

Die Lagerscheibe 14 gehört zu dem Axiallager 9. Sie wird beidseitig von einem Ringjoch 47 aus geblechtem SI-Eisen eingefasst. Das Ringjoch 47 ist zwischen den beiden Gehäusescheiben 37, 38 eingefasst und fixiert. Es hat einen äußeren Jochmantel 48, von dem zwei nach innen gerichtete Jochschenkel 49, 50 ausgehen, die L-förmigen Querschnitt haben und mit gegeneinander gerichteten Schenkelabschnitten die Lagerscheibe 14 einfassen, wobei zwei Magnetspalte 51, 52 entstehen. Der Umfangsseite der Lagerscheibe 14 benachbart befinden sich innerhalb des Ringjochs 47 zwei axial nebeneinander liegende Permanentmagnete 53, 54, welche - symbolisiert durch die Dreiecke - entgegengesetzt axial polarisiert sind. Sie liegen aneinander und an den Jochschenkeln 49, 50 an. Sie werden von einer elektromagnetischen Ringspule 55 umgeben, die den Raum zwischen den Permanentmagneten 53, 54 sowie dem Jochmantel 48 und den Jochschenkeln 49, 50 ausfüllt.

Aufgrund der magnetischen Instabilität der Welle 2 in axialer Richtung muss über das Axiallager 9 eine axiale Stabilisierung bewirkt werden. Dies geschieht bei einer axialen Auslenkung der Lagerscheibe 14 dadurch, dass diese Auslenkung von einem hier nicht näher dargestellten, im Stand der Technik bekannten Sensor erfasst wird und hierdurch der ebenfalls nicht dargestellte Regler den Stromzufluss zu der Ringspule 55 so steuert, dass ein zusätzlicher Magnetfluss erzeugt wird, der insgesamt zu einer asymmetrischen Magnetflussverteilung innerhalb des Axiallagers 9 führt, die der Auslenkung der Lagerscheibe entgegenwirkt.

Zwischen den Lagerscheiben 12, 14, 16 und deren Statoren 19, 20, 21, 22 bzw. Jochschenkeln 49, 50 sind Spalte gebildet, die durch einen im wesentlichen entlang der Wellenachse verlaufenden Strömungskanal miteinander in Verbindung stehen. Das Lager 6 wird über einen Strömungskanal 62 mit Druckluft beaufschlagt, die über eine in das Verdichtergehäuse 64 mündende Leitung 65 zugeführt wird. Der Kühlluftstrom strömt dann nacheinander durch die Lagerspalte der Lager 6, 9 und 5 und tritt durch alternativ oder zusammen vorgesehene Austrittsöffnungen 63, 66 im Lagergehäuse 39 bzw. der Verdichtergehäuserückwand aus. Auf diese Weise wird die im Betrieb des Turboladers entstehende Wärme von den vergleichsweise temperaturempfindlichen Magnetlagern abgeführt.

## Patentansprüche

1. Abgasturbolader (1) mit einem Gehäuse und einer im Gehäuse um ihre Längsachse drehbar angeordneten Welle (2), auf der ein Turbinenrad (4) und ein Verdichterrad (3) sitzen und die in als Magnetlager ausgebildeten Radiallagern (5, 6) und wenigstens einem Axiallager (9) geführt ist, wobei die Lager (5, 6, 9) jeweils eine auf der Welle (2) sitzende Lagerscheibe (12,14,16) und wenigstens einen dieser an zumindest einer Seite axial unter Bildung eines Spaltes gegenüberliegenden Stator (19, 20, 21, 22, 49, 50) aufweisen, **dadurch gekennzeichnet, dass** in dem Gehäuse mindestens ein Strömungskanal (62, 65) gebildet ist, über den mindestens ein Lagerspalt mit einem Luftstrom beaufschlagbar ist.

2. Abgasturbolader nach Anspruch 1, **dadurch gekennzeichnet, dass** der mindestens eine Strömungskanal in ein Verdichtergehäuse (64) des Turboladers (1) mündet.

3. Abgasturbolader nach Anspruch 1 oder 2, **dadurch gekennzeichnet, dass** der Strömungskanal (62, 65) zumindest abschnittsweise durch eine außerhalb des Gehäuses verlaufende Leitung (65) gebildet ist.

4. Abgasturbolader nach einem der Ansprüche 1 bis 3, **dadurch gekennzeichnet, dass** ein separater Strömungskanal zu jedem der Lager (5, 6, 9) führt.

5. Abgasturbolader nach einem der Ansprüche 1 bis 4, **dadurch gekennzeichnet, dass** die Spalte der Lager (5, 6, 9) über weitere in dem Gehäuse gebildete Strömungskanäle miteinander kommunizieren.

6. Abgasturbolader nach Anspruch 5, **dadurch gekennzeichnet, dass** der Strömungskanal (62, 65) nur zu einem der Lager, vorzugsweise dem turbinenradseitigen Lager (6) führt.

7. Abgasturbolader nach einem der Ansprüche 1 bis 6, **dadurch gekennzeichnet, dass** das Gehäuse mindestens eine Austrittsöffnung (63, 66) für die durch die Lager (5, 6, 9) strömende Luft aufweist.

8. Abgasturbolader nach Anspruch 7, **dadurch gekennzeichnet, dass** die Austrittsöffnung durch einen Spalt zwischen dem Gehäuse und der Welle (2) im Bereich des Verdichterrads (3) gebildet ist.

9. Abgasturbolader nach einem der Ansprüche 2 bis 8, **dadurch gekennzeichnet, dass** der Querschnitt des Strömungskanals (62, 65) klein ist gegenüber dem Querschnitt einer zum Motor führenden Leitung für die verdichtete Luft.

10. Verfahren zur Kühlung von magnetischen Lagern (5, 6, 9) eines Abgasturboladers (1), wobei der Abgasturbolader ein Gehäuse und eine im Gehäuse um ihre Längsachse drehbar angeordnete Welle (2), auf der ein Turbinenrad (4) und ein Verdichterrad (3) sitzen, aufweist und wobei die Lager (5, 6, 9) auf der Welle (2) angeordnete Lagerscheiben und von diesen durch einen Luftspalt getrennte, gehäusefeste Statoren (19, 20, 21, 22, 49, 50) aufweisen, **dadurch gekennzeichnet, dass** die Lagerspalte mit einem Luftstrom beaufschlagt werden.

11. Verfahren nach Anspruch 10, **dadurch gekennzeichnet, dass** der Luftstrom als Teilstrom von der mittels des Verdichterrads (3) verdichteten Luft abgezweigt wird.

12. Verfahren nach Anspruch 10 oder 11, **dadurch gekennzeichnet, dass** der Luftstrom durch einen Gehäusekanal (62, 65) zu mindestens einem der Lagerspalte geführt wird.

13. Verfahren nach einem der Ansprüche 10 bis 12, **dadurch gekennzeichnet, dass** die Lagerspalte unabhängig voneinander mit einem Luftstrom beaufschlagt werden.

14. Verfahren nach einem der Ansprüche 10 bis 12, **dadurch gekennzeichnet, dass** die über Gehäusekanäle miteinander in Verbindung stehenden Lagerspalte seriell mit dem Luftstrom beaufschlagt werden.

15. Verfahren nach Anspruch 14, **dadurch gekennzeichnet, dass** der Luftstrom von der Turbinenradseite zur Verdichterradseite durch die Lagerspalte geführt wird.

16. Verfahren nach einem der Ansprüche 10 bis 15, **dadurch gekennzeichnet, dass** der Luftstrom nach dem Durchströmen mindestens eines Lagerspalts über eine Austrittsöffnung in den Bereich außerhalb des Gehäuses geleitet wird.

17. Verfahren nach Anspruch 16, **dadurch gekennzeichnet, dass** die Austrittsöffnung durch Weglassen eines verdichterradseitigen Wellendichtrings geschaffen wird.

## Claims

1. Exhaust gas turbocharger (1) having a housing and having a shaft (2) which is arranged so as to be capable of rotating about its longitudinal axis in the housing and on which a turbine wheel (4) and a compressor wheel (3) are seated and which is guided in radial bearings (5, 6) which are embodied as magnetic bearings and in at least one axial bearing (9), the bearings (5, 6, 9) each having a bearing plate (12, 14, 16) which is seated on the shaft (2), and at least one stator (19, 20, 21, 22, 49, 50) which lies axially opposite said bearing plate on at least one side, forming a gap, **characterized in that** at least one flow duct (62, 65), via which at least one bearing gap can have an air stream applied to it, is formed in the housing.

2. Exhaust gas turbocharger according to Claim 1, **characterized in that** the at least one flow duct opens into a compressor housing (64) of the turbocharger (1).

3. Exhaust gas turbocharger according to Claim 1 or 2, **characterized in that** the flow duct (62, 65) is formed at least in sections by a line (65) running outside the housing.

4. Exhaust gas turbocharger according to one of Claims 1 to 3, **characterized in that** a separate flow duct leads to each of the bearings (5, 6, 9).

5. Exhaust gas turbocharger according to one of Claims 1 to 4, **characterized in that** the gaps of the bearings (5, 6, 9) communicate with one another via further flow ducts formed in the housing.

6. Exhaust gas turbocharger according to Claim 5, **characterized in that** the flow duct (62, 65) leads to only one of the bearings, preferably to the turbine-wheel-side bearing (6).

7. Exhaust gas turbocharger according to one of Claims 1 to 6, **characterized in that** the housing has at least one outlet opening (63, 66) for the air which flows through the bearings (5, 6, 9).

8. Exhaust gas turbocharger according to Claim 7, **characterized in that** the outlet opening is formed by a gap between the housing and the shaft (2) in the region of the compressor wheel (3).

9. Exhaust gas turbocharger according to one of Claims 2 to 8, **characterized in that** the cross section of the flow duct (62, 65) is small in comparison with the cross section of a line, leading to the engine, for the compressed air.

10. Method for cooling magnetic bearings (5, 6, 9) of an exhaust gas turbocharger (1), the exhaust gas turbocharger having a housing and a shaft (2) which is arranged so as to be capable of rotating about its longitudinal axis in the housing and on which a turbine wheel (4) and a compressor wheel (3) are seated, and the bearings (5, 6, 9) having bearing plates which are arranged on the shaft (2) and stators (19, 20, 21, 22, 49, 50) which are fixed to the housing and are separated from said bearing plates by an air gap, **characterized in that** the bearing gaps having an air stream applied to them.

11. Method according to Claim 10, **characterized in that** the air stream is branched off as a partial stream from the air which is compressed by means of the compressor wheel (3).

12. Method according to one of Claims 10 or 11, **characterized in that** the air stream is led through a housing duct (62, 65) to at least one of the bearing gaps.

13. Method according to one of Claims 10 to 12, **characterized in that** the bearing gaps have an air stream applied to them independently of one another.

14. Method according to one of Claims 10 to 12, **characterized in that** the bearing gaps which are connected to one another via housing ducts have the air stream applied to them serially.

15. Method according to Claim 14, **characterized in that** the air stream is led from the turbine wheel side to the compressor wheel side to the bearing gaps.

16. Method according to one of Claims 10 to 15, **characterized in that** after the air stream passes through at least one bearing gap, the air stream is directed into the region outside the housing via an outlet opening.

17. Method according to Claim 16, **characterized in that** the outlet opening is provided by omitting a compressor-wheel-side shaft sealing ring.

## Revendications

1. Turbocompresseur à gaz d'échappement (1) comprenant un carter et un arbre (2) disposé dans le carter de manière à pouvoir tourner autour de son axe longitudinal, sur lequel sont montées une roue de turbine (4) et une roue de compresseur (3) et qui est guidé dans des paliers radiaux (5, 6) réalisés sous forme de paliers magnétiques et dans au moins un palier axial (9), les paliers (5, 6, 9) présentant à chaque fois un disque de palier (12, 14, 16) monté sur l'arbre (2) et présentant au moins un stator (19, 20, 21, 22, 49, 50) opposé axialement à celui-ci sur au moins un côté, en formant une fente, **caractérisé en ce qu'**au moins un canal d'écoulement (62, 65) est formé dans le carter, par le biais duquel au moins une fente de palier peut être sollicitée par un flux d'air.

2. Turbocompresseur à gaz d'échappement selon la revendication 1, **caractérisé en ce que** l'au moins un canal d'écoulement débouche dans un carter de compresseur (64) du turbocompresseur (1).

3. Turbocompresseur à gaz d'échappement selon la revendication 1 ou 2, **caractérisé en ce que** le canal d'écoulement (62, 65) est formé au moins en partie par une conduite (65) s'étendant en dehors du carter.

4. Turbocompresseur à gaz d'échappement selon l'une quelconque des revendications 1 à 3, **caractérisé en ce qu'**un canal d'écoulement séparé conduit à chacun des paliers (5, 6, 9).

5. Turbocompresseur à gaz d'échappement selon l'une quelconque des revendications 1 à 4, **caractérisé en ce que** les fentes des paliers (5, 6, 9) communiquent les unes avec les autres par le biais d'autres canaux d'écoulement formés dans le carter.

6. Turbocompresseur à gaz d'échappement selon la revendication 5, **caractérisé en ce que** le canal d'écoulement (62, 65) ne conduit qu'à l'un des paliers, de préférence le palier (6) du côté de la roue de turbine.

7. Turbocompresseur à gaz d'échappement selon l'une quelconque des revendications 1 à 6, **caractérisé en ce que** le carter présente au moins une ouverture de sortie (63, 66) pour l'air s'écoulant à travers les paliers (5, 6, 9).

8. Turbocompresseur à gaz d'échappement selon la revendication 7, **caractérisé en ce que** l'ouverture de sortie est formée par une fente entre le carter et l'arbre (2) dans la région de la roue de compresseur (3).

9. Turbocompresseur à gaz d'échappement selon l'une quelconque des revendications 2 à 8, **caractérisé en ce que** la section transversale du canal d'écoulement (62, 65) est petite par rapport à la section transversale d'une conduite pour l'air comprimé conduisant au moteur.

10. Procédé pour refroidir des paliers magnétiques (5, 6, 9) d'un turbocompresseur à gaz d'échappement (1), le turbocompresseur à gaz d'échappement présentant un carter et un arbre (2) disposé dans le carter de manière à pouvoir tourner autour de son axe longitudinal, sur lequel sont montées une roue de turbine (4) et une roue de compresseur (3), les paliers (5, 6, 9) présentant des disques de paliers disposés sur l'arbre (2) et des stators (19, 20, 21, 22, 49, 50) fixés au carter, séparés de ceux-ci par un entrefer, **caractérisé en ce que** les fentes des paliers sont sollicitées par un flux d'air.

11. Procédé selon la revendication 10, **caractérisé en ce que** le flux d'air est dévié sous forme de flux partiel de l'air comprimé au moyen de la roue de compresseur (3).

12. Procédé selon la revendication 10 ou 11, **caractérisé en ce que** le flux d'air est guidé par un canal de carter (62, 65) vers au moins l'une des fentes des paliers.

13. Procédé selon l'une quelconque des revendications 10 à 12, **caractérisé en ce que** les fentes des paliers sont sollicitées par un flux d'air indépendamment les unes des autres.

14. Procédé selon l'une quelconque des revendications 10 à 12, **caractérisé en ce que** les fentes des paliers en liaison les unes avec les autres par le biais de canaux de carter sont sollicitées en série par le flux d'air.

15. Procédé selon la revendication 14, **caractérisé en ce que** le flux d'air est guidé depuis le côté de la roue de turbine vers le côté de la roue de compresseur à travers les fentes des paliers.

16. Procédé selon l'une quelconque des revendications 10 à 15, **caractérisé en ce que** le flux d'air est guidé après son passage à travers au moins une fente de palier, par le biais d'une ouverture de sortie dans la région en dehors du carter.

17. Procédé selon la revendication 16, **caractérisé en ce que** l'ouverture de sortie est créée en omettant un joint d'étanchéité d'arbre du côté de la roue de compresseur.
